# EUROPEAN PATENT SPECIFICATION

(11) **EP 2 122 932 B1**
(45) Date of publication and mention of the grant of the patent: **19.11.2014**
(21) Application number: 08716797.9
(22) Date of filing: 11.02.2008
(51) Int. Cl.: H04L 12/701, H04L 12/725, H04W 40/02, H04W 36/00, H04W 76/04, H04W 80/04, H04W 84/04

(54) **NETWORK ELEMENT AND METHOD FOR ROUTING DATA IN A DATA COMMUNICATION SYSTEM**
NETZWERKELEMENT UND VERFAHREN ZUM ROUTEN VON DATEN IN EINEM DATENKOMMUNIKATIONSSYSTEM
ÉLÉMENT RÉSEAU ET PROCÉDÉ POUR ROUTER DES DONNÉES DANS UN SYSTÈME DE COMMUNICATION DE DONNÉES

(30) Priority: 09.02.2007 GB 0702485
(43) Date of publication of application: 25.11.2009
(73) Proprietor: ip.access Limited, Cambridge CB23 6DW (GB)
(72) Inventor: JOHNSON, Nicholas, Dougall, London W1H 7RS (GB); PIERCY, Neil, Philip, Royston Hertfordshire SG8 7RE (GB); NEIL, David, Cambridge Cambridgeshire CB4 3QH (GB)
(74) Representative: Wray, Antony John
(86) International application number: PCT/EP2008/051615
(87) International publication number: WO 2008/096013

(56) References cited:
- US-A1- 2004 208 153
- REY J ET AL: "Media Aware Overlay Routing in Ambient Networks" PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 2, 11 September 2005 (2005-09-11), pages 952-957, XP010926320 ISBN: 978-978-38007-2-4
- ETRI: "Identification of key issues and architectural requirements for 3GPP system evolution", 3GPP DRAFT; S2-051338, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Athens; 20050516, 16 May 2005 (2005-05-16), XP050252840, [retrieved on 2005-05-16]

## Description

### Field of the invention

The field of the invention relates to a cellular communication system, a communication network element and method for accessing applications in the cellular communication system. In particular, the field of the invention relates to a network element and method for accessing Internet Protocol (IP) Multimedia Subsystem (IMS) of a cellular radio telecommunications network.

### Background of the Invention

To aid understanding of terminology used in this description, the following terms are meant to encompass at least the following meanings:
**Femtocell:** a small (of order 50m diameter or less) cell in a cellular network;
**Femto Layer:** a radio network layer consisting exclusively of femtocells;
**Macro Layer:** a radio network layer consisting of traditional high power macro base station equipment (for example Node-Bs or BTSs);
**3G Access Point (3GAP):** a low power, short range, 3G base station that creates a femtocell;
**Access Point (AP):** synonym for 3G Access Point unless stated otherwise;
**User Equipment (UE):** the term for a 3G terminal device, handset, smartphone, data card, or other similar device;
**User Agent (UA):** the software entity in a SIP (Session Initiation Protocol) network which represents an end-user in that it originates and responds to session creation requests from other User Agents - in other words, it places calls and answers them on behalf of a user; and
**OAM:** Operations And Maintenance logic (which includes Configuration Management).

Data communication, within both wireless and wired communication systems, is performed generally using either circuit-switched (CS) or packet-switched (PS) technology. In PS technology, data is packetised, with packet switching routes established between a source node and a destination node.

In wireless communication systems, an established harmonised cellular radio communication system is the Global System for Mobile Communications (GSM), often referred to as a 2^{nd} generation (2G) system. An enhancement to this cellular technology can be found in the Global Packet Radio System (GPRS), which supports PS data on a basic cellular platform, such as GSM. A further enhancement to such communication systems is the 3^{rd} Generation (3G) of mobile telephone standards and technology. An example of such 3G standards and technology is the Universal Mobile Telecommunications System (UMTS), developed by the 3^{rd} Generation Partnership Project (3GPP) (www.3gpp.org). 3G systems are intended to provide a harmonised standard under which cellular radio communications networks and systems will provide enhanced levels of interfacing and compatibility with other types of communications systems and networks, including fixed communications systems such as the Internet. GPRS and UMTS/3GPP networks have been designed to accommodate PS data, thereby facilitating support of Internet services, such as web browsing, file sharing, email, etc.

Typically, wireless communication units, or User Equipment (UE) as they are often referred to in 3GPP parlance, communicate with a Core Network (CN) of a wireless communication system via a Radio Network Subsystem (RNS). A wireless communication network typically comprises a plurality of radio network subsystems, each radio network subsystem comprising one or more cells to which UEs may attach, and thereby connect to the network.

There are two major technology trends in recent advanced telecommunication networks. In one (the so-called Internet Protocol (IP) Multimedia Subsystem (IMS)), an Internet Protocol (IP) core network is configured to provide call control, switching, presence, press-to-talk, multi-party calling, multimedia white-boarding and many other added value telecommunications services as a common platform for fixed and mobile networks. The way it achieves this goal is to require all the fixed and mobile networks that connect to it to present their signalling and media in Packet Switched format - that is, all the call and session signalling, and all the media (the voice channels from the various calling parties, the whiteboard data, and so on), is digitally coded and presented as Internet Protocol packets, which are then routed and delivered to the end users using a session control protocol called the Session Initiation Protocol (or SIP). The IMS offers great promise in reducing telecommunication costs and allows greater diversity of service provision, in a common manner, between fixed and mobile networks worldwide.

Femto-cell or pico-cell Access Points (APs) are also a recent development within the field of wireless cellular communication systems. Femto-cells or pico-cells are effectively communication coverage areas supported by low power base stations (otherwise referred to as serving communication units). These cells are able to be piggy-backed onto the more widely used macro-cellular network and support communications to UEs in a restricted, for example 'in-building', environment. Typical applications for such femto-cell or pico-cell APs include, by way of example, residential and commercial (e.g. office) locations, 'hotspots', etc, whereby an AP can be connected to a core network via, for example, the Internet using a broadband connection or the like. In this manner, femto-cells or pico-cells can be provided in a simple, scalable deployment in specific in-building locations where, for example, network congestion at the macro-cell level is an issue.

Thus, a new way of providing cellular radio access for cellular subscribers to their host networks is to provide a layer (namely a communication cell providing localised wireless communication services), called the Femto Layer, of small, low power base stations or access points located in the home or other indoor environment. The femto base stations, hereinafter referred to as Access Points (APs) may be connected back to the host core (macro cellular) network through a broadband IP connection (including, but not limited to ADSL (Asymmetric Digital Subscriber Line), Cable Network, SDSL (Symmetric Digital Subscriber Line) or leased line). This technique has great attraction because it provides cellular coverage and capacity exactly where users require it, which is indoors. Although there are other methods of providing indoor coverage, this method of using the Internet to connect very low power base stations has the unique property of providing mass market, wide-area coverage and capacity at very low cost to the Operators, thereby allowing them to offer new cellular services at very low rates or with maintained profit margin.

However, the combination of both of these properties (namely IMS and femto cell technology) using the standardised 3GPP (3rd Generation Partnership Project) and existing IMS architectures requires Network Operators to greatly increase their Packet Switched (PS) access network and core network capacity, which is very unattractive on cost grounds. Many architectures have been proposed to attempt to solve this problem, for example by providing a SIP user agent (UA) or SIP proxy within the low power base station. In this manner, the IMS client application in the user's handset is able to access the IMS application server directly through the Internet. However, all the architectures that have been proposed so far suffer from at least three major shortcomings, stemming from the same source - which is that the user must disconnect from the cellular network in order to access the IMS via SIP.

US 2004/208153 A1 proposes a mechanism to address 2nd generation network capacity issues by focussing on roaming in the macro network context, and making use of agents in the roamed (foreign) and home networks to enable routing of external internet traffic directly from the foreign network where necessary, thereby helping alleviate core network loading by using an agent in the core of each respective network. Further, in the document titled "Media Aware Overlay Routing in Ambient Networks", and published in 2005 IEEE 16th International Symposium Personal, Indoor and Mobile Radio Communications, Germany 11-14 Sept 2005, methods are proposed for separating traffic types within an IMS network, but not between separate core networks and an IMS network. The immediate consequences of these architectures are that:
(i) the user is inaccessible on the cellular network when they are camped on the IMS, unless there is a significant amount of core network interworking equipment between the cellular network and the IMS,
(ii) there is no possibility of handover in either direction between Femto Layer and Macro Layer, with calls and sessions dropping as users move between the layers, and
(iii) when the architecture involves a UA embedded in the 3GAP, rather than the UE, there is no continuity of service for the user between the IMS layer and the cellular layer - all voice mail/call forwarding/CLI (Caller Line Identification) and other supplementary services are duplicated and potentially different between the two layers - unless (as for (ii) above) there is a significant amount of additional inter-working equipment installed. Even when that inter-working equipment is present, the embedded IMS client can never offer more than a 'lowest common denominator' service set, effectively duplicating the 3GPP service set at best.

The IMS is effectively an IP session switching network which uses the Session Initiation Protocol (RFC 3261, as elaborated in 3GPP 24.228 and other specifications) and a series of Network Nodes and standardised interfaces to provide secure and authenticated subscriber access to general IP multimedia services (including voice, video, messaging, white-boarding, presence, press-to-talk and so on). The IMS is standardised in a series of 3GPP specifications and IETF Requests for Comment (RFCs) which define how services are accessed.

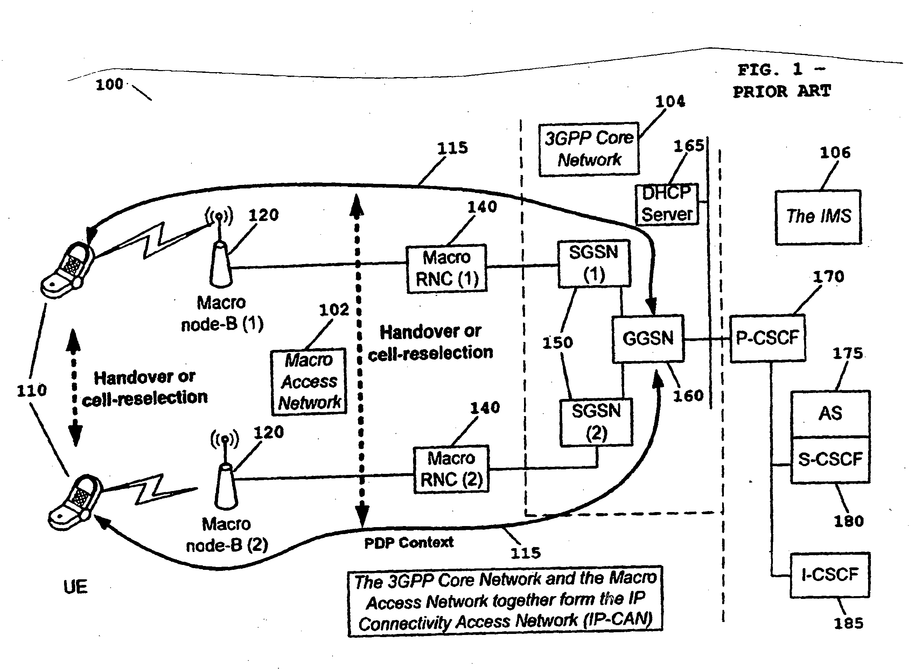

Referring now to FIG. 1, a known architecture 100 of a 3GPP network configured for accessing the IMS, through the General Packet Radio Service (GPRS) that is available in both GSM, other 2nd Generation networks, and UMTS and other 3rd Generation networks, is illustrated.

The architecture 100 is illustrated as being divided into three architectural networks: a macro access network 102, a 3GPP core network 104 and an IMS network 106. The macro access network 102 comprises user equipment 110 wirelessly communicating to serving communication units, which are termed NodeBs 120 in 3GPP parlance. The NodeBs 120 are operably coupled to Radio Network Controllers (RNCs) 140, for example via the Internet. The RNCs 140 are operably coupled to a Gateway GPRS Support Node (GGSN) 160, via Serving GPRS Support Nodes (SGSNs) 150, which are located in the 3GPP core network 104. The GGSN 160 is operably coupled to a dynamic host configuration protocol (DHCP) server 165, also located within the 3GPP core network 104. The GGSN 160 is also operably coupled to Proxy Call Session Control Function (P-CSCF) logic located in the IMS network 106. The P-CSCF logic 170 is operably coupled to the standard IMS service nodes, the Application Server (AS), the Serving Call State Control Function (S-CSCF) 180 and the Intermediate Call State Control Function (I-CSCF) 185.

The connection method for IMS is defined in 3GPP specification 23.228 section 5.1. In response to the first IMS service request, a Packet Data Protocol (PDP) Context 115 is established between the UE 110 and the GGSN 160, as shown.

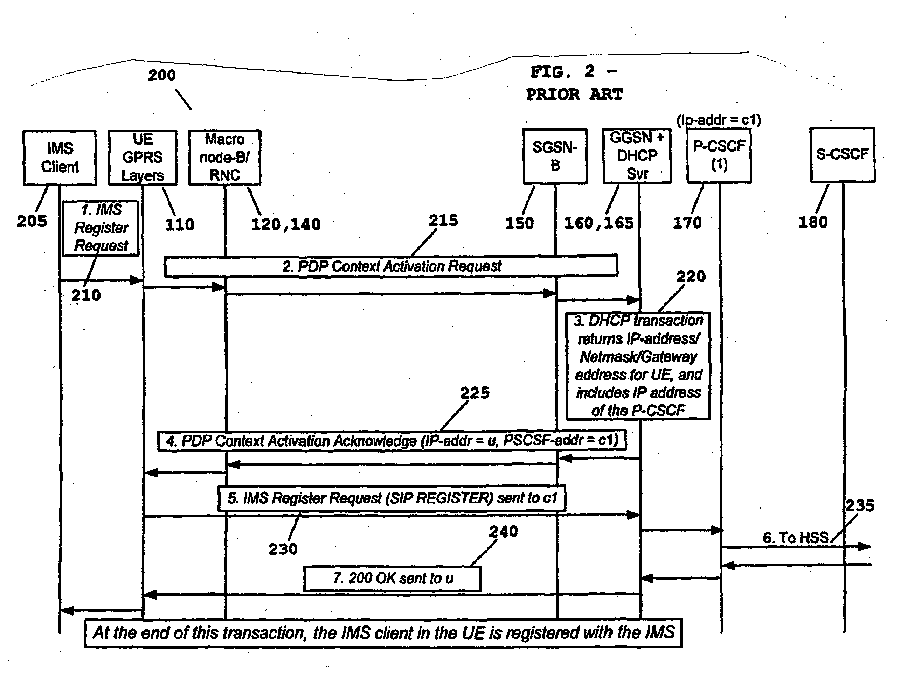

Referring now to FIG. 2 a message sequence chart 200 illustrates an IMS registration process of an UE, which is the first IMS service that the UE has to access. The registration service performs two functions: first it authenticates the IMS client 205 in the UE with the IMS itself (and vice versa), in order to verify subscription details and so on. Secondly, the registration service registers the IMS subscriber's location with the Home Subscriber Server (HSS). At this point the IMS application in the UE can access IMS services by sending its SIP messages to the P-CSCF 170, and the IMS is able to route sessions from other subscribers (or applications) to the user through the P-CSCF 170 by interrogating the HSS. This Registration Procedure is more fully described in 3GPP specification 23.228 section 5.2.

In summary, the registration process is initiated by an IMS client 205 on the UE, with an IMS register request, as shown in step 210, to GPRS layers 208 within the UE. An initiation of a DHCP discovery procedure, which assigns the UE an IP address, and also provides it with the IP address of the P-CSCF, which is the access gateway to the IMS, is illustrated in steps 215, 220, 225. Here, messages are sent from the UE GPRS layers 208, through the macro cell NodeB 120, RNC 140 and SGSN 150 to the GGSN 160 and DHCP server 165. The DHCP server 165 returns, to the UE, the IP address/ netmask/ Gateway address of the P-CSCF 170, as shown in step 220.

In this manner, the registration procedure tells the UE where to route its Service Requests (SIP methods: INVITE and so on), as shown in steps 230, 235 and it tells the network which P-CSCF 170 to route SIP methods to for this subscriber.

The assumption in the 3GPP specifications is that the cellular network is wholly responsible for the mobility of the user through the network, as described in 3GPP specification 23.228 section 4.1. Therefore, typically, it requires a complete GPRS sub-system, with sufficient capacity, to route all of the media traffic for the sessions established to the IMS.

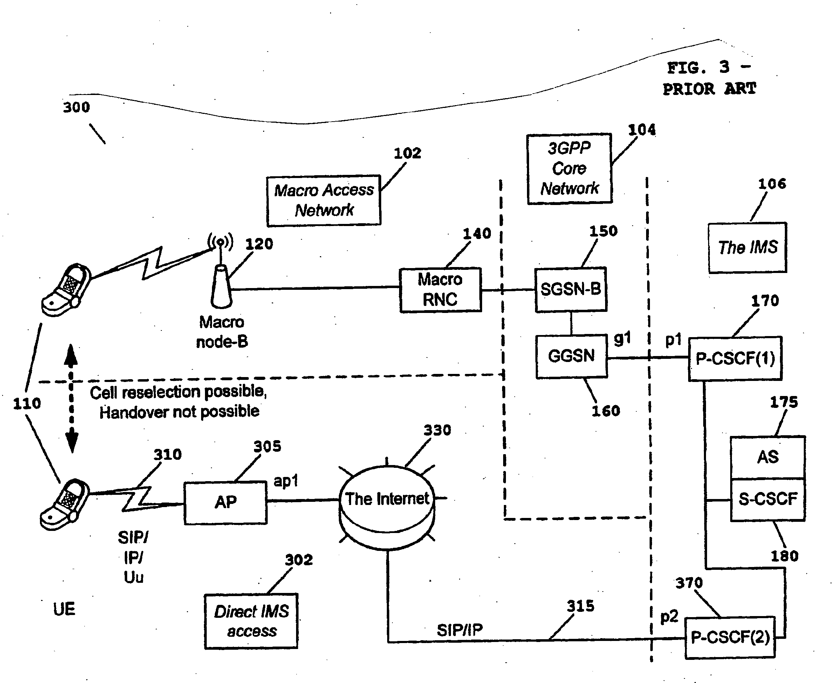

An alternative architecture 300 that removes the need for a complete, full capacity GPRS network, for example for IMS access from a femto cell, is illustrated in FIG. 3. The alternative architecture 300 is illustrated as being divided into four architectural networks: a macro access network 102, a 3GPP core network 104, an IMS network 106 and a direct IMS network 302. The macro access network 102 again comprises user equipment 110 wirelessly communicating to NodeBs 120 that are operably coupled to RNCs 140. The RNCs 140 are operably coupled to a GGSN 160, via an SGSN 150, which are located in the 3GPP core network 104. The GGSN 160 is also operably coupled to P-CSCF logic 170 located in the IMS network 106. The P-CSCF logic 170 is operably coupled to AS, S-CSCF 180 and I-CSCF 185.

In this alternative architecture, a direct IMS access network 302 allows a UE to communicate directly with a second P-CSCF logic 370, via wireless SIP/IP/Uu messages sent via the femto cell access point (AP) 305 and Internet 330. The femto cell AP 305 includes an IMS client that is arranged to terminate the 3GPP GPRS signalling, and simply provides an IP packet connection to the second P-CSCF 370 direct from the AP 305. The advantage of this alternative architecture is clearly simplicity, and therefore cost, as it simply requires an AP 305 and a port in the P-CSCF 370, and thus no external GPRS network.

However, there are several disadvantages to this alternative architecture. First, unless there is a significant amount of core network/IMS interworking equipment, the UE 110 is effectively disconnected from the cellular network 102, 104, whilst connected in this mode. Hence, the UE 110 is unable to receive incoming cellular calls or texts, nor maintain supplementary service settings. Secondly, regardless of a presence or not of inter-working equipment, the UE is unable to handover to the macro access network 102, nor can the macro access network 102 hand over to the femto cell AP 305. In this configuration, the UE 110 is no longer a cellular phone, but is effectively in a fixed (or more accurately, tethered) connection to the IMS.

Thus, despite the attraction of the simplicity and potential low cost of the alternative architecture, these functional disadvantages make it highly undesirable, and unlikely to be adopted except in specialist application niches.

US 2004/208153 A1 describes a system whereby a Foreign Agent (FA) executes a routing policy by encapsulating (not modifying) a roaming user's single mobile IP address with a suitable 'care-of address' associated with the FA when the user roams. ETRI: "Identification of key issues and architectural requirements for 3GPP system evolution" 3GPP DRAFT; S2-051338, 3RD GENERATION PARTNERSHIP PROJECT (3GPP), MOBILE COMPETENCE CENTRE, FRANCE, vol. SA WG2, no. Athens; 20050516, 16 May 2005, XP050252840 mentions problems of handover between 3GPP and non-3GPP networks in IP Multimedia Subsystems.

Thus, there exists a need for a method and apparatus for IMS access, for example from a femto cell in a wireless communication, which aims to address at least some of the shortcomings of past and present techniques and/or mechanisms.

### Summary of the Invention

Accordingly, the invention seeks to mitigate, alleviate or eliminate one or more of the above mentioned disadvantages singly or in any combination.

According to a first aspect of the invention, there is provided a network element for supporting packet switched (PS) data communication over a data communication system. The network element comprises packet inspection logic arranged to inspect at least one received PS data packet that is being routed through the network element. The packet inspection logic is arranged to determine whether the inspected at least one received PS data packet that is being routed through the network element comprises a destination address for an Application Domain supported by the network element. The network element further comprises routing logic for routing, in response to a determination that the inspected at least one received PS data packet comprises a destination address for an Application Domain supported by the network element, the at least one received PS data packet direct to an Application Domain logic layer. The PS routing logic comprises embedded Session Initiation Protocol, SIP, proxy logic arranged to enable the network element to create an independent security association with the Application Domain logic layer and further comprises, or is operably coupled to, address modifying logic arranged to modify at least one address of the received PS data being routed through the network element. The network element is further adapted to modify the at least one address of the at least one received PS data packet to an IMS ingress point address, comprising a Proxy Call Session Control Function (P-CSCF) logic address located in the IMS domain, to assist in re-routing particular PS data packets relating to an Application domain supported by the network element. The PS routing logic is further capable of handing over an on-going communication from first P-CSCF logic to second P-CSCF logic using an 'UPDATE' or a 're-INVITE' message.

In this manner, the provision of routing logic in a network element, such as a 3G AP, enables the network element to address many different Packet Service Application Domains, without requiring the core network to add SGSN or GGSN port capacity. Furthermore, the inventive concept enables an ability for the network element to handover the Application session, both into and out of, say, a femto cell, without having to tear the communication link down and re-establish it.

In one optional embodiment of the invention, the routing logic may comprise, or be operably coupled to, a routing data store arranged to provide a destination address associated with at least one Application Domain supported by the network element. In this manner, the network element is able to re-route received PS data according to the Application domain contained within the received PS data. For example, in one optional embodiment of the invention, in response to identifying the destination address associated with the at least one Application Domain, for example an Internet Protocol Multimedia Subsystem (IMS) domain, supported by the network element, the PS Router logic re-routes the received PS data according to an applications domain address stored in the PS router data store.

In one optional embodiment of the invention, the data store may be arranged to store at least one of: first P-CSCF address data, second P-CSCF address data, local IP address data, IMS IP address data and AC address data ,to facilitate packet inspection.

In one optional embodiment of the invention, if the packet inspection logic determines a destination address that belongs within the domain of the network element, then the received PS data packet is routed, to security layer logic within the network element. In one optional embodiment of the invention, in response to the packet inspection logic determining that the destination address does not belong within the domain of the network element or an Application Domain supported by the network element, then the destination address of the received PS data packet is not modified and the received PS data packet is routed direct to the Internet.

In one optional embodiment of the invention, the network element may comprise embedded SIP proxy logic to enable the network element to create an independent security association with the IMS Application.

In one optional embodiment of the invention, network element may comprise logic for registering with Operations and Management logic and acknowledgement of a successful registration comprises an Internet Protocol (IP) address of an application domain ingress gateway (P-CSCF-address).

In one optional embodiment of the invention, the network element may be a 3^{rd} generation access point (3G AP) network element supporting femto cell communication.

According to a second aspect of the invention, there is provided a method for routing packet switched (PS) data over a data communication system comprising a cellular communication network element operably coupled to the Internet. The method comprises inspecting at least one received PS data packet that is being routed through the network element. The method further comprises determining whether the inspected at least one received PS data packet that is being routed through the network element comprises a destination address for an Application Domain supported by the network element. The method further comprises routing, in response to a determination that the inspected at least one received PS data packet comprises a destination address for an Application Domain supported by the network element, the at least one received PS data packet direct to an application domain logic layer within the network element. The method further comprises creating an independent security association with the Application Domain logic layer by embedded Session Initiation Protocol, SIP, proxy logic within the network element and modifying at least one address of the received PS data being routed through the network element to an IMS ingress point address which comprises a Proxy Call Session Control Function (P-CSCF) logic address located in the IMS domain, and handing over an on-going communication of an Application session, without having to close and re-establish a communication link by handing over an on-going communication from first P-CSCF logic (820) to second P-CSCF logic (822) using an 'UPDATE' or 're-INVITE' message.

According to a third aspect of the invention, there is provided a wireless communication system comprising a network element for supporting packet switched (PS) data communication. The network element comprises packet inspection logic arranged to inspect at least one received PS data packet that is being routed through the network element. The network element further comprises packet inspection logic arranged to determine whether the inspected at least one received PS data packet that is being routed through the network element comprises a destination address for an Application Domain supported by the network element. The network element further comprises routing logic for routing, in response to a determination that the inspected at least one received PS data packet comprises a destination address for an Application Domain supported by the network element, the at least one received PS data packet direct to an Application Domain logic layer. The PS routing logic comprises embedded Session Initiation Protocol, SIP, proxy logic arranged to enable the network element to create an independent security association with the Application Domain logic layer and comprises, or is operably coupled to, address modifying logic arranged to modify at least one address of the received PS data being routed through the network element to an IMS ingress point address which comprises a Proxy Call Session Control Function (P-CSCF) logic address located in the IMS domain and wherein the routing logic is arranged to hand over an on-going communication of an Application session, without having to close and re-establish a communication link by handing over an on-going communication from first P-CSCF logic (820) to second P-CSCF logic (822) using an 'UPDATE' or 're-INVITE' message.

According to a fourth aspect of the invention there is provided a computer-readable storage element having computer-readable code stored thereon for programming signal processing logic to perform a method for routing packet switched (PS) data over a cellular communication system comprising a cellular communication network element. The code is operable for inspecting at least one received PS data packet that is being routed through the network element. The computer-readable code is further operable for determining whether the inspected at least one received PS data packet that is being routed through the network element comprises a destination address for an Application Domain supported by the network element; and routing, in response to a determination that the inspected at least one received PS data packet comprises a destination address for an Application Domain supported by the network element, the at least one received PS data packet direct to an application domain logic layer within the network element, creating an independent security association with the Application Domain logic layer by embedded Session Initiation Protocol, SIP, proxy logic within the network element and modifying at least one address of the received PS data being routed through the network element, modifying at least one address of the received PS data being routed through the network element to an IMS ingress point address which comprises a Proxy Call Session Control Function (P-CSCF) logic address located in the IMS domain, and handing over an on-going communication of an Application session, without having to close and re-establish a communication link by handing over an on-going communication from first P-CSCF logic (820) to second P-CSCF logic (822) using an 'UPDATE' or 're-INVITE' message.

These and other aspects, features and advantages of the invention will be apparent from, and elucidated with reference to, the embodiments described hereinafter.

### Brief Description of the Drawings

FIG. 1 illustrates a schematic of a prior art architecture that provides access to the IMS of a cellular network;
FIG. 2 illustrates a message sequence chart of a prior art example of an IMS Access Initial Registration; and
FIG. 3 illustrates a schematic of an alternative prior art architecture example of IMS Access, where an IMS client is embedded in the Access Point.

Embodiments of the invention will be described, by way of example only, with reference to the accompanying drawings, in which:
FIG. 4 illustrates a schematic of an architecture that provides access to the IMS of a cellular network, according to an embodiment of the invention;
FIG. 5 illustrates internal architecture of an Access Point for direct IMS Access, according to an embodiment of the invention;
FIG. 6 illustrates a message sequence chart of an example of Initial Registration, according to an embodiment of the invention;
FIG. 7 illustrates a message sequence chart of an example of incoming IMS call handling, according to an embodiment of the invention;
FIG. 8 illustrates a message sequence chart of an example of hand-over from a femto cell to a macro cell according to an embodiment of the invention; and
FIG. 9 illustrates a typical computing system that may be employed to implement processing functionality in embodiments of the invention.

### Embodiments of the Invention

According to embodiments of the invention, a 3^{rd} generation (3G) femto cell access point (AP) is configured to interrogate (inspect) packet switch (PS) data packets through the AP, and if the PS data packet relates to an Application supported by the AP, the AP routes the interrogated PS data packet to Application Domain logic directly.

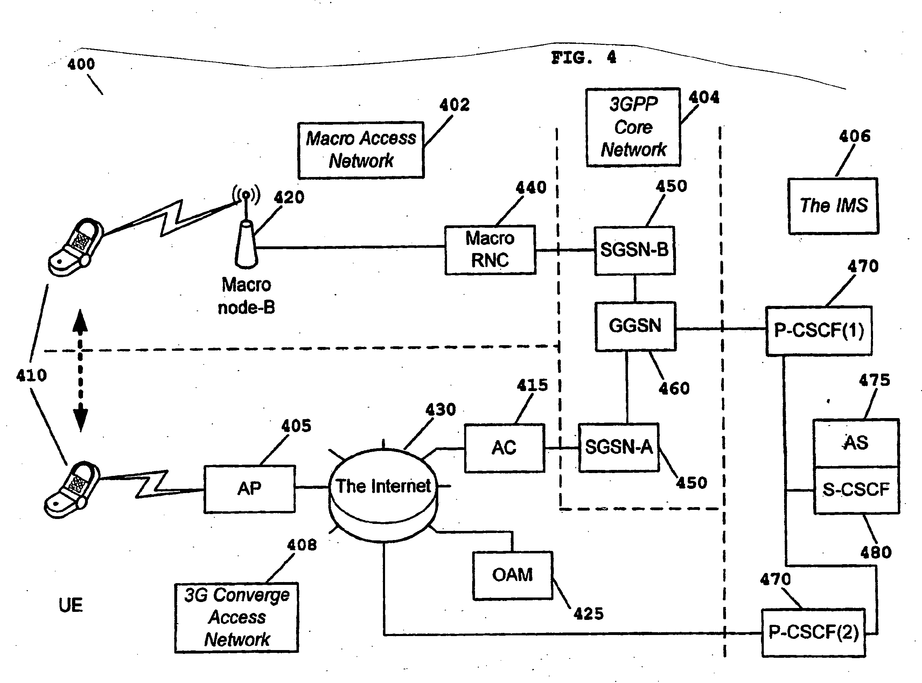

Referring now to FIG. 4, an example of a wireless network architecture 400 adapted in accordance with an embodiment of the invention is illustrated. Those skilled in the art, however, will recognize and appreciate that the specifics of this example are merely illustrative of some embodiments, and that the teachings set forth herein are applicable in a variety of alternative settings. For example, since the teachings described hereafter do not depend on a particular cellular communication network conforming to any specific standard, it is envisaged that the teachings and inventive concept described therein can be applied to any type of cellular communication network, although a 3GPP femto cell network is shown in this embodiment. As such, other alternative architectures or implementations within wireless (e.g. cellular) communication networks conforming to different standards are contemplated and are considered as falling within the scope of the various teachings described.

The wireless network architecture 400 of FIG. 4 is shown incorporating a traditional macro access network 402 operably coupled to an IMS network 406 via a 3GPP core network 406, and an IP Access Network Architecture (labelled 3G Converge Access Network) 408 adapted according to support embodiments of the invention. A network architecture such as this combines the cost effectiveness of direct IMS access via the 3G converge access network 408, without requiring additional GPRS user plane capacity, yet maintains cellular connectivity so that the UE is able to roam freely into and out of the femto cell.

Thus, it is envisaged that the wireless network architecture 400 of FIG. 4 comprises, at least in the context of a femto cell, a plurality of User Equipment (UE), with one UE illustrated for simplicity purposes only, wirelessly communicating with a 3G Access Point (3G AP) 405 that has been adapted according to embodiments of the invention. As will be appreciated by a skilled artisan, a 3G Access Point (3G AP) 405 is a communication element that facilities access to a communication network via, say, a femto-cell.

The AP 405 is arranged to provide Universal Terrestrial Radio Access Network (UTRAN) functionality in the femto cell network. Consequently, the AP 405 is coupled back to the 3GPP Core Network through the 3G Access Controller and its lu-ps interface. The AP 405 has also embedded general packet radio service (GPRS) termination and inspection logic (not shown). As a consequence, the AP 405 may optionally, and independently, provide classic GPRS services to a UE through the GGSN 160 to the 3GPP core network 402, and also route an internet protocol (IP) data stream from a UE application software program (in particular an IMS application), direct to the Internet. In the architecture 400 of FIG. 4, the AP 405 comprises PS router logic (not shown). AP 405 optionally contains an embedded SIP proxy logic (both client proxy logic and server proxy logic) so that the AP 405 may, if necessary, create an independent security association with the IMS.

The architecture 400 comprises a plurality of Access Points (APs), for example one or more per household or indoor area, which together make up the Femto Layer. The 3G AP 410 is operably coupled to a 3G access controller (3G AC) 415 (e.g. Femto Cell Controller), which aggregates the plurality of Access Points into a single lu-ps interface. The 3G AP 405 may be operably coupled to the 3G AC 415 over the owner's broadband connection across the Internet 430, as described below. In addition, in the architecture 400 illustrated, the 3G AP 405 may also be operably coupled to an Operations and Management (OAM) function 425 over the owner's broadband connection across the Internet 430.

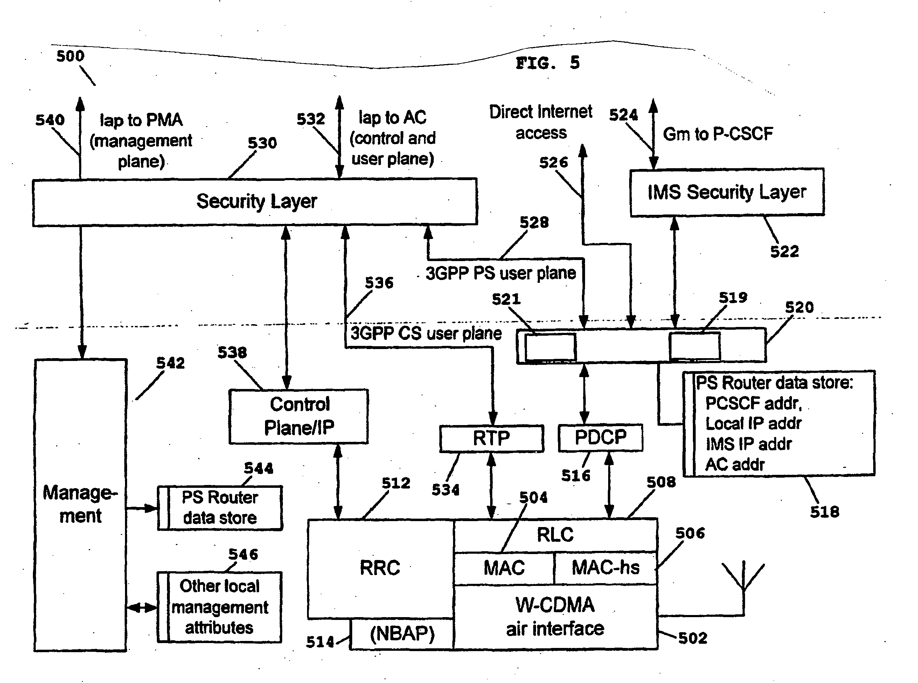

The OAM function 425 performs many functions. In accordance with embodiments of the invention, the OAM function 425 is configured to store two separate lists of addresses, one each for Access Controller addresses and P-CSCF addresses. Thus, in this manner, the OAM function 425 is able to provide the duplet (AC address (ac1), P-CSCF address (p2)) to any given AP, based on a geographical location of the AP (or some other optimising criteria), so that the AP is able to connect to its optimal 3G AC 415 and optimal P-CSCF 470. The AP 405 is then able to store this address information in a memory element, for example its PS router data store (as described below with respect to FIG. 5).

The 3G AC 415 is operably coupled to GGSN 460 via a SGSN 450 of the 3GPP core network 404 in the known manner. The 3G AC 415 receives connections from the APs 405 and aggregates them into a single lu-ps interface, which is the standard access interface by which GPRS service is offered to a UE 410 from the 3GPP core network 404.

Notably, in accordance with one embodiment of the invention, the 3G AP 410 is configured at a time of manufacture, or subsequently, with an IP address of the OAM 425 that it should initially connect to.

Embodiments of the invention provide a cost reduced optimisation for legacy network GPRS access to Application domains, for example an IMS Application domain, and obviates or mitigates the problems inherent in the embedded UA or SIP Proxy architectures.

Embodiments of the invention use a routing technique to allow Packet Switched data from the UE to be routed directly to the Application domain, or the Internet, or security logic based on the data packet being inspected. Therefore, the UE is able to connect directly to the IMS application without going through a costly intermediate GPRS core network. In addition, the routing technique uses a combination of signalling techniques to allow the Packet Switched connection to the IMS to be maintained as the user moves between the Macro network 402 and the Femto network, thereby maintaining connectivity with the cellular network whilst registered with the IMS.

In using the embodiments herein described, cellular Network Operators are able to provide full-featured IMS service access capability using the most cost effective transmission network, namely the Internet.

Furthermore, cellular Network Operators are able to reduce their costs to the benefit of their stockholders and end-users alike. In addition, there is no need for cellular Network Operators to resort to embedded IMS client architectures, with their inherent additional core network costs and functional disadvantages. Moreover, there is a clear upgrade path for cellular Network Operators allowing evolution from standard 3GPP access today, to include direct IMS access when UEs are able to support it, with little or no change of network infrastructure.

Referring now to FIG. 5, an example of an internal architecture 500 of a W-CDMA 3G Access Point, adapted to support direct IMS Access, is illustrated, according to embodiments of the invention. The AP 500 comprises a number of radio frequency circuits and elements (not shown) to support wireless transceiver communication with a remote UE. The architecture is illustrated with respect to a wideband code division multiple access (WCDMA) air interface 502. The AP 500 is illustrated in a logical data flow management context. As such, the AP 500 comprises NBAP logic 514 operably coupled to radio resource control (RRC) logic 512. AP 500 also comprises medium access control (MAC) logic 508 and MAC-hs logic 506, operably coupled to radio link control (RLC) logic 510.

AP 500 has been adapted to comprise security layer logic 530 and IMS security layer logic 522. Security layer logic 530 is operably coupled to radio resource control (RRC) logic 512 via control plane/Internet Protocol (IP) logic 538. Security layer logic 530 is also operably coupled to RLC logic 510 via Real-time Protocol (RTP) logic 534 using a 3GPP circuit switched (CS) user plane interface 536. Security layer logic 530 is additionally operably coupled to RLC logic 510 via Packet Switched (PS) Router logic 520 and PDCP logic 516 using a 3GPP packet switched (PS) user plane interface 528. Security layer logic 530 has a first lap interface 540 to PMA management plane logic and a second lap interface 532 to AC (control and user plane) logic. Security layer logic 530 is also operably coupled to AP management logic 542, which is operably coupled to a PS router data store 544 and other local management attributes 546.

IMS security layer logic 522 has a Gm interface 524 to P-CSCF logic and is also operably coupled to RLC logic 510 via Packet Switched (PS) Router logic 520 and PDCP logic 516. PS Router logic 520 is operably coupled to PS router data store 518, which has been adapted to store first P-CSCF address data, second P-CSCF address data, local IP address data, IMS IP address data and AC address data.

In accordance with embodiments of the invention, PS Router logic 520 has a direct internet access 526.

In accordance with embodiments of the invention, the femto cell AP 500 has been adapted in the following manner. In FIG. 5, the radio physical interface is managed by the physical radio 502, and protocol entities 504 506, 508, 512, 514. Emerging from this group of entities 502-514 are three data flows in the known manner. The control, or signalling plane, message flow emerges from RRC logic 512 and is embedded in the lap high layer protocol in the Control Plane/IP entity 538, which is then secured using the Security Layer logic 530. The secure control, or signalling plane, message flow is then multiplexed with the User Plane data and transported back to the 3G Access Controller (or AC 415 as shown in FIG. 4) in the normal way on logical connection 532. The second data flow from the protocol entity group 502-514 is the Circuit Switched User Plane, which carries voice and Circuit Switched Data Traffic. This is embedded in the RTP protocol logic 534, carried to the Security Layer logic 530 where it is multiplexed with the Control Plane Traffic and carried to the 3G AC over logical link 532.

The third data flow to emerge from the protocol entity group 502-514 is the Packet Switched (PS) Data Flow, which has header compression removed in the PDCP logic entity 516 and which is then recognisable user data, embedded in IP packets.

In accordance with embodiments of the invention, PS Router logic 520 has been incorporated into the PS data flow path. Notably, PS Router logic 520 comprises packet inspection logic 519 arranged to interrogate (inspect) received PS data messages and determine the destination address of the data packets passing through it in an uplink direction. Thereafter, in response to the identification of the destination address, the PS Router logic 520 may comprise address modifying logic 521, arranged to modify a destination (or source) address to facilitate re-routing the received PS data messages according to a corresponding Applications domain network address stored in the PS router data store 518.

Notably, if the identified destination address belongs within the domain of the Network Operator (sometimes referred to as their 'walled garden'), then the packet is routed in the normal way on the 3GPP PS user plane path 528, to the security layer logic 530, where it is multiplexed with control plane and other user plane data and sent to the femto cell access controller over logical link 532 in the normal way.

However, in accordance with embodiments of the invention, the PS Router logic entity 520 recognises other Application Domains, and applies Application specific security procedures. The Application Domain is recognised by the fact that the Destination Address of the IP stream lies within the Application IP Address Range stored in the PS Router Data Store 518. The Application specific security procedure is defined by the Application according to its own security requirements. For instance, for the IMS, the Application Security may require an IPSec tunnel to the IMS ingress point, rather than the SSL/SRTP security provided by the femto Security Layer provided by entity 532 in FIG. 5.

In one embodiment of the invention, the PS Router logic entity 520 also employs a default operational mode, when it determines that the destination address of the received data packet belongs neither to the Network Operator (in that the destination address is not within the Operator's 'Walled Garden') nor to any of the configured Application Domains. In this case, the data is routed unaltered to its destination, notably on the Direct Internet access path 526.

In FIG. 5, one specific example of an Application Domain, namely the IMS domain, is illustrated. In this example, the PS Router logic entity 520 recognises that the user plane packet is destined for an entity within the IMS (inasmuch as the destination IMS IP Address is within the PS Router Data Store 518. In this example, the PS Router logic entity 520 passes the user plane packet through the IMS Security logic layer 522 and sends user plane packet directly to its configured IMS ingress point. For example, the user plane packet is sent to the P-CSCF address obtained from the PS Router data store 518, over the link 524.

A skilled artisan will appreciate that embodiments of the invention may be extended to other Application Domains by adding the corresponding domain address data in the PS Router data store 518 and any required routing and security logic or functions in the corresponding PS router logic entity 520 and corresponding logic layer 522.

Embodiments of the invention are described hereafter with respect to FIG's 6 to 8 and aimed to support at least the following operations:
- U1.: Initial registration in the femto cell/layer,
- U2.: Initial registration in the macro cell/layer,
- U3.: Cell Reselection to the femto cell from the macro cell/layer
- U4.: Mobile Terminated Session Setup to a UE recently Reselected to the macro cell/layer from the femto cell/layer,
- U5.: Mobile Originated new session setup in the femto cell/layer,
- U6.: Hand-in from Macro to femto cell/layer.
- U7.: Hand-out to the macro cell/layer from the femto cell/layer

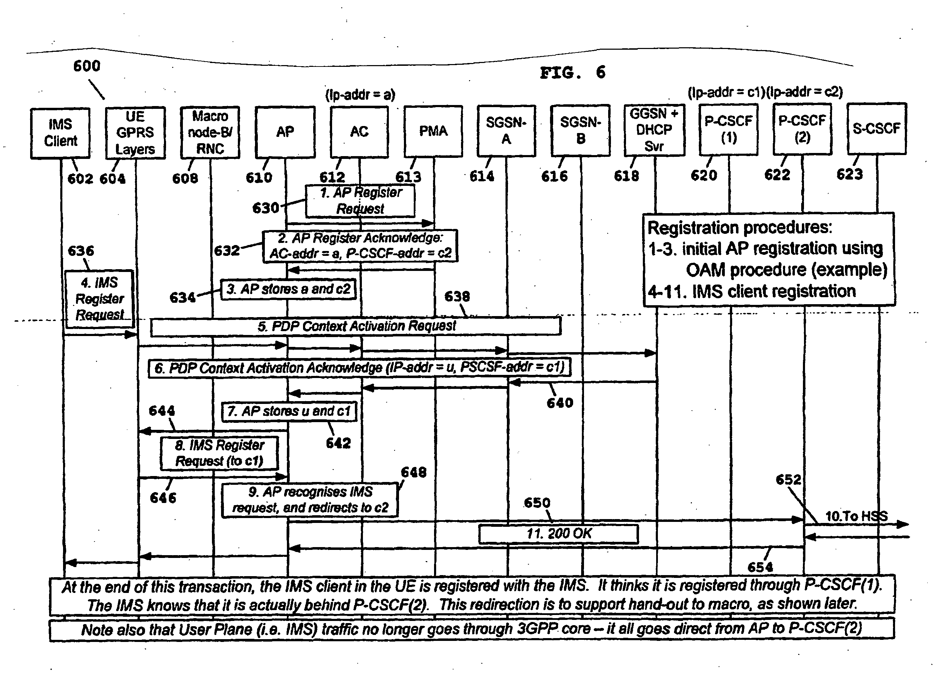

Referring now to FIG. 6, a message sequence chart 600 illustrates examples of Initial Registration, adapted to support embodiments of the invention. The message sequence chart 600 comprises messages being transferred between the following communication entities: an IMS client in a UE 602, GPRS logic layers in the UE 604, a macro cell NodeB and/or RNC 608, a femto cell access point (AP) 610, a femto cell access controller (AC) 612, a Provisioning and Management Automation (PMA) System 613 a first SGSN 614, a second SGSN 616, a GGSN and DHCP server 618, a first P-CSCF logic entity 620, a second P-CSCF logic entity 622 and an S-CSCF 624.

First, in the context of femto cell registration, the AP 608 registers with its Operations and Management (OAM) System, otherwise known as the Provisioning and Management Automation (PMA) System 612. The AP 608 registers itself with the PMA 612 using the request message 630. The successful registration is acknowledged by the PMA in message 632, which also carries the address information for the AP's controlling AC (AC-addr).

Notably, in accordance with embodiments of the invention, message 632 has been adapted to carry the IP Address of the IMS Ingress gateway (P-CSCF-addr). This address is configured in the PMA 612, rather than the AP 608, in order to make the AP 608 deployable in any network. In this manner, the AP 608 is configured for such networks only when it becomes active.

When the IMS client application 602 is initiated in the UE, the first task of the IMS client application 602 (as described above) is to register with the IMS network. In order to do this, the IMS client application 602 establishes a PDP Context with the GGSN 618 in the cellular core network, as shown in message 638, and receives an IP address and P-CSCF address of its own in message 640.

The femto cell AP 610 uses its packet inspection logic capability (not shown) to locate and store the IP address and P-CSCF address pair that has been allocated to the UE, from the messages 638, 640 that are transferred during PDP Context Activation, otherwise referred to as Non-Access Stratum (NAS). Thus, it is envisaged that if PDP Context Activation NAS message encryption is enabled in the host network (rendering the PDP Context Activation messages opaque to the AP 610), the IP address and P-CSCF address pair that has been allocated to the UE may be deduced from examination of the source and destination address of the first SIP transaction which it routes or proxies, as shown in message 642.

The femto cell AP 610 may use its knowledge of the P-CSCF logic allocated to the UE (for example first P-CSCF logic 620 at address 'P1') to detect all SIP messages intended for the first P-CSCF logic 620. The femto cell AP 610 then separately routes all SIP messages to its own P-CSCF logic 622 (for example second P-CSCF logic 622 at address 'P2'). The femto cell AP 610 may route the SIP messages directly at the IP level. Alternatively, it is envisaged that the femto cell AP 610 may proxy the SIP messages using its optional embedded SIP proxy if required, as shown in message 648.

The femto cell AP 610 may use its knowledge of the IP address allocated to the UE, to detect all SIP messages intended for the UE coming from its own P-CSCF (for example second P-CSCF logic 622). The femto cell AP 610 may then re-write the SIP and IP headers so that it appears that the message appears to have come from the first P-CSCF logic 620, through which the UE IMS Client Application 602 initially attempted to register.

In particular, according to one embodiment of the invention, the femto cell AP 610 may route the SIP REGISTER method to its own P-CSCF logic (for example second P-CSCF logic 622) and route any SIP response back to the UE as if it came from the UE's P-CSCF (for example first P-CSCF logic 620). In one embodiment of the invention, it is envisaged that the femto cell AP 610 may achieve this by rewriting the relevant 'From:', 'Via:' and/or 'To:' fields in the SIP message header.

At this step, the UE believes that it is registered through the first P-CSCF logic 620 (which is via the expensive SGSN 614 and GGSN 618 in the 3GPP core network, whereas the UE is actually registered through second P-CSCF logic 622, which is therefore via the inexpensive direct Internet Access route.

Hence, whilst the UE is registered to the cellular network through the femto cell, the IMS traffic (both signalling and data) directly traverses the Internet, thereby avoiding a potentially heavily loaded and expensive 3GPP/GPRS core network.

Embodiments of the invention additionally support a reselection of a UEs IMS communication to the Femto cell (AP 608, AC 610) from the macro cell (RNS comprising a nodeB/RNC 606). With a PDP context in 'active but idle' mode (for example the UE is in a cell-FACH state, which will be the case after the IMS registration, but before or between any incoming or outgoing sessions) then, if there is no lu-r interface between the macro and femto cells, which is envisaged as being a common situation, then the PDP Context is 'closed' on cell reselection to the femto layer/cell. In this case, the IMS client 602 in the UE is arranged to automatically reregister on the network, thereby activating a new PDP Context. The new PDP context will be set up for the femto cell, and will therefore continue in the manner described above with respect to a femto cell selection procedure.

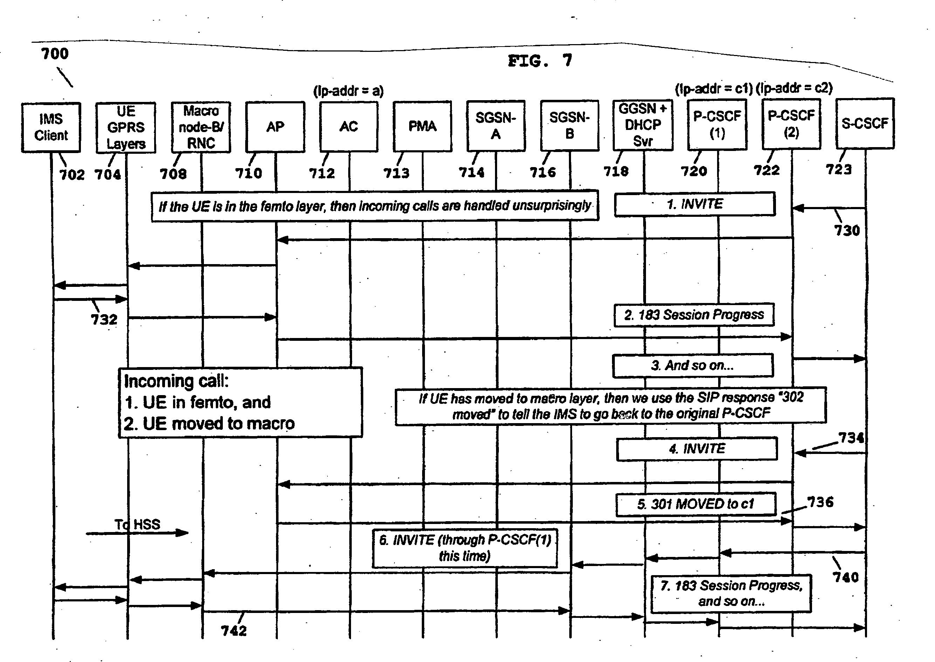

Referring now to FIG. 7, a message sequence chart 700 illustrates an example of incoming IMS call handling, adapted according to an embodiment of the invention. The message sequence chart 700 comprises messages being transferred between the following communication entities: an IMS client in a UE 702, GPRS logic layers in the UE 704, radio layers within the UE 706, a macro cell NodeB and/or RNC 708, a femto cell access point (AP) 710, a femto cell access controller (AC) 712, a first SGSN 714, a second SGSN 716, a GGSN and DHCP server 718, a first P-CSCF logic entity 720, a second P-CSCF logic entity 722 and an IMS management gateway (MGW) 724.

FIG. 7 illustrates one mechanism for implementing a mobile terminated session setup to a UE that was recently reselected to the macro cell from the femto cell. When the UE reselects to the macro network, the existing 3GPP standard procedure, termed 'Serving RNS Relocation procedure' is employed. When applied to other cellular network packet access technologies, it is envisaged that similar or corresponding procedures may be employed. In performing the serving RNS relocation procedure, a PDP Context used by the IMS Client Application 702 of the UE to access the first P-CSCF logic 720 is maintained and simply handed over to the macro Access Network. Having reselected out of the femto cell, the UE's IMS Client Application 702 continues to access IMS services.

However, in this procedure, there is no intervening re-router. Hence, the IMS signalling is transferred via first P-CSCF logic 720. Therefore, as far as the UE is concerned, there is no change in configuration, and any outgoing sessions can be originated as before.

As far as the network is concerned, however, the UE is still located behind (contactable through) second P-CSCF logic 722. As such, incoming calls are routed towards second P-CSCF logic 722.

When an incoming call (for example a SIP INVITE message 734) is received through the second P-CSCF logic 722, the femto cell AP 710 recognises that the UE is no longer in its cell, and responds with the SIP Response "301 moved to p1" in message 736. In this manner, the UE informs the network that the UA for this subscriber should now be accessed through the conventional (GPRS) route.

Subsequent SIP invite messages 740 to the UE, and responses therefrom 742, are then routed through first P-CSCF logic 720. In this manner, the Message Sequence Chart 700 illustrates a mobile terminated session setup process, adapted according to embodiments of the invention.

In alternative embodiments of the invention, it is also envisaged that macro cell selection may be implemented. In this embodiment, when in the Macro Layer, the IMS user may select a macro cell and register for IMS service in the normal way, as if the Femto cell did not exist. Thus, the UE is able to create a PDP Context to the GGSN, and registers through the first P-CSCF logic 622, 722, as described earlier.

In further alternative embodiments of the invention, it is also envisaged that reselection or handover to the femto cell may be performed. In this further alternative embodiment of the invention, when in the macro cell, the UE may reselect or handover back into the femto Layer, depending on whether the PDP Context is in an 'Idle' or 'Active' mode. For example, the PDP Context may be deemed to be in an 'Idle' mode when it is activated, but no user data has been transferred for a certain period of time. In this state, the UE may be configured to fall back to a Cell-FACH state (in the 3GPP case).

Alternatively, the PDP Context may be deemed active when it is activated and an IMS signalling or media stream is ongoing and transferring data (during a call) for instance, or has been within a certain timeout. In this case, the UE will be configured as being in a Cell-DCH (dedicated channel) state.

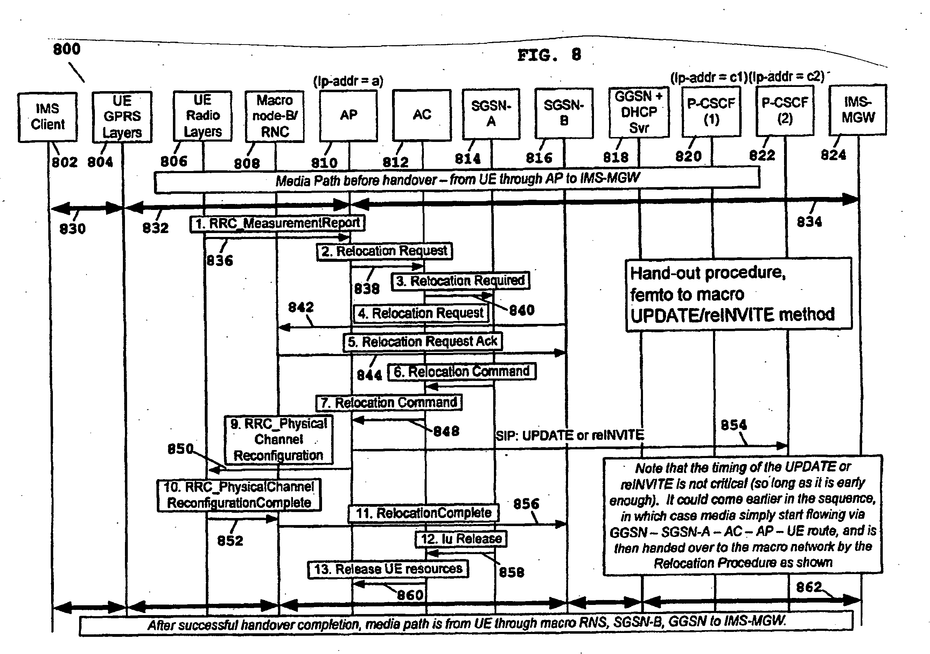

Embodiments of the invention additionally support a handover from a femto cell to a macro cell in the following manner, as illustrated in the message sequence chart 800 of FIG. 8. The message sequence chart 800 comprises messages being transferred between the following communication entities: an IMS client in a UE 802, GPRS logic layers in the UE 804, radio layers within the UE 806, a macro cell NodeB and/or RNC 808, a femto cell access point (AP) 810, a femto cell access controller (AC) 812, a first SGSN 814, a second SGSN 816, a GGSN and DHCP server 818, a first P-CSCF logic entity 820, a second P-CSCF logic entity 822 and an IMS management gateway (MGW) 824.

The hand-over from a Femto cell to a Macro cell takes place in accordance with the 3GPP standard's SRNS-Relocation Procedure (3GPP TS 25.413, sections 8.6-8.14 inclusive), by which the PDP context is handed over from the femto cell radio network subsystem (RNS) to the macro cell RNS, possibly, though not necessarily, involving a second SGSN.

In FIG. 8, the hand-over commences with measurement reports indicating a handover is required in steps 836, 838 from the UE radio layers 806 through the femto cell AP 810 and on to the femto cell AC 812. The femto cell AC 812 then requests a handover from the femto cell to the macro cell by issuing a request to the first SGSN 814 in step 840. The handover then proceeds in the known SRNS-Relocation Procedure manner, as shown in steps 842 to 848.

When the femto cell AP 810 receives the Relocation Command message 848, the femto cell AP 810 knows that the handover is proceeding as requested, and is most likely to succeed. Therefore the femto cell AP 810 sends a SIP INVITE or SIP UPDATE message in step 854 to its P-CSCF 822, which indicates a change of media route back via the GGSN 818 rather than direct to the femto cell AP 810.

The timing of this message 854 is important, but not critical. It must be sent early enough that the media stream begins to flow through the GGSN 818 at or before the moment of hard handover of the UE to the Macro cell. If the message 854 is sent early, then the media stream begins to flow through the GGSN 818 before the handover event has occurred. This is acceptable, since the handover will cause the media stream to follow the PDP Context out to the Macro Layer. Therefore the 'UPDATE' or 'reINVITE' message 854 may be sent at any time after the initiation of the SRNS Relocation procedure in step 838 up to the point where message 850 is sent from the femto cell AP 810 to the UE radio layers 806.

Following a receipt of the 'RRC_PhysicalReconfiguration' message 850 at the UE, the handover from a femto cell to a macro cell is complete following the known message sequence 852, 856, 858, 860, as illustrated.

It is important that this handover is as seamless as possible, so that there is no break in the media stream whilst the PDP Context relocates between the Femto cell and the Macro cell. If the 'UPDATE' or 'reINVITE' message 854 is sent too late, then the media stream will still be flowing via the direct Internet route to the femto cell AP 810 when the UE has handed over to the Macro cell, and there will be a perceptible break in the media stream.

It is noteworthy that the uplink (in a direction from the UE to the network) media stream will change routes automatically. When the uplink packets are being received by the femto cell AP 810, then they are routed to the IMS-MGW 824. When the UE has handed over from the femto cell to the macro cell, then the uplink packets will simply stop being sent from the femto cell AP 810, and instead will be sent through the macro cell node-B 808, and be routed to the IMS-MGW 824 through the standard GPRS route, e.g. via the GGSN 818.

The choice of whether to send a 'SIP UPDATE' or a 'reINVITE' message 854 is determined by the state of the call at the point of handover. Traditionally a 'reINVITE' message will be used for calls that are already established, whereas an 'UPDATE' message will be used for calls that are not yet established (where the establishing 'ACK' (acknowledgement message) has not yet been issued). It may be possible that the 'UPDATE' method may be used in all cases.

It is envisaged that there may optionally be a configurable delay after the issuing of the 'reINVITE' or 'UPDATE' message 854 and the sending of the 'RRC_PhysicalReconfiguration' message 850. In this manner, the IMS MGW 824 is provided with sufficient time to respond, so that the duration of any media flow to the femto cell AP 810 via the GGSN 818 route is minimised, and any possibility of late media switchover is removed.

Thus, in this manner, a femto cell IMS call is handed over to a macro cell by switching from message flow 830, 832, 834 to message flow 862, where the media path flow after a successful handover completion is from a UE through the macro cell RNS 808, the macro cell SGSN 816, GGSN 818 to the IMS MGW 824.

It is envisaged that embodiments of the invention additionally support a handover from a Macro cell to a Femto cell. Using the same entity references as shown in FIG. 8, the handover from a Macro cell to a Femto cell incorporates the following. With a PDP context activated and active and the UE in Cell-DCH state (such as is the case with an active ongoing IMS session), then a Serving-RNS Relocation Procedure would occur, in accordance with the current 3GPP standard. The initiation of a Serving-RNS Relocation Procedure re-routes the PDP Context to pass through the 3G AC 812 and 3G AP 810 to the UE radio layers 806.

The ongoing session(s) (whether outgoing or incoming) will transparently continue through the standard GPRS data path, to the IMS MGW 824. It is envisaged that this/these on-going session(s) may optionally be re-routed via the second P-CSCF logic 822 using an 'UPDATE' or 're-INVITE' message, as described above.

Any new outgoing IMS session(s) may be recognised as such by the femto cell AP 810, for example by inspection of the SIP Call-Id parameter. In an alternative embodiment of the invention, a new outgoing IMS session(s) may be recognised as such by the femto cell AP 810 by detection of a session creation SIP, such as an 'INVITE' message.

In a yet further alternative embodiment of the invention, a new outgoing IMS session(s) may be recognised as such by the femto cell AP 810 by detection of a session modification message, such as an 'UPDATE' or a 're-INVITE' message. The femto cell AP 810 would then re-route the new outgoing IMS session(s) via the direct Internet data path to the second P-CSCF logic 822.

In addition, the PS-Router logic within the femto cell AP 810 will update its 'IMS address' parameter, so that it can recognise future outgoing messages and re-route them accordingly.

Any new incoming IMS sessions (which will come via the standard GPRS data path) will be recognised as such (by use of the SIP session identifier or other method, as described above. The new incoming IMS session will generate a SIP '301 Moved to p2' response. The SIP '301 Moved to p2' response is a standard SIP response that tells the upstream server or proxy that the intended recipient is no longer at this address, and that it should try address p2 instead. Then the S-CSCF will re-try the method through the new P-CSCF logic 820 and the second P-CSCF logic 822.

It is noteworthy that after the Reselection or Handover into the femto cell, the UE still considers that it is talking to the IMS MGW 824 through the first P-CSCF logic 820.

Thus, in this manner, a macro cell IMS call may be handed over to a femto cell.

It will be appreciated that, for clarity purposes, the above description has described embodiments of the invention with reference to different functional units, logical elements and signal processors. However, it will be apparent to a skilled artisan that any suitable distribution of functionality between different functional units, logical elements or signal processors, for example with respect to the 3G network element, may be used without detracting from the inventive concept. For example, it is envisaged that functionality illustrated to be performed by separate signal processors or logic elements may be performed by the same signal processor or logic element. Hence, references to specific functional units are only to be seen as references to suitable means for providing the described functionality, rather than indicative of a strict logical or physical structure or organization.

It is envisaged that aspects of the invention may be implemented in any suitable form including hardware, software, firmware or any combination of these. The invention may optionally be implemented, at least partly, as computer software running on one or more data processors and/or digital signal processors. Thus, the elements and components of an embodiment of the invention may be physically, functionally and logically implemented in any suitable way. Indeed, the functionality may be implemented in a single unit, in a plurality of units or as part of other functional units.

It is envisaged that the aforementioned embodiments aim to provide one or more of the following advantages:
(i) The ability to address many different Packet Service Application Domains, without requiring the core network to add SGSN or GGSN port capacity.
(ii) The ability to handover the Application session, both into and out of the femto cell, without having to tear the communication link down and re-establish it.

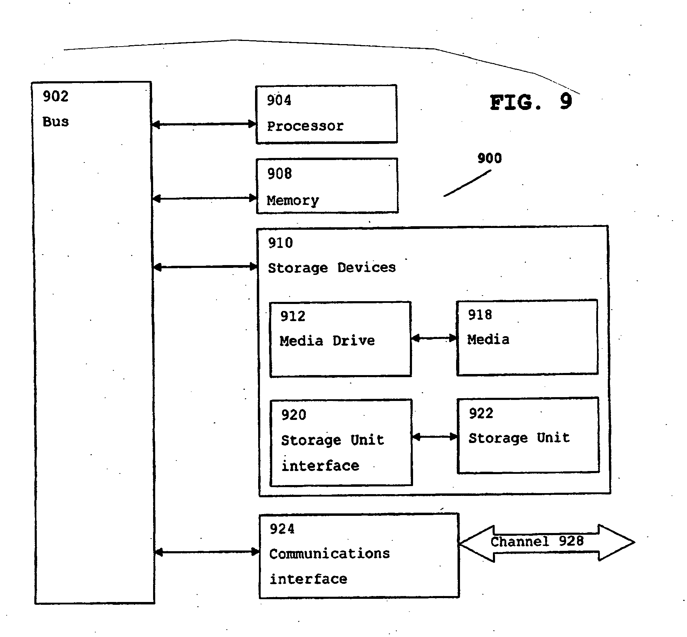

FIG. 9 illustrates a typical computing system 900 that may be employed to implement processing functionality in embodiments of the invention. Computing systems of this type may be used in 3G APs or 3G ACs (in particular, processing logic in a 3G AP that handles PS data traffic). Those skilled in the relevant art will also recognize how to implement the invention using other computer or processing systems or architectures. Computing system 900 can include one or more processors, such as a processor 904. Processor 904 can be implemented using a general or special purpose processing engine such as, for example, a microprocessor, microcontroller or other control logic. In this example, processor 904 is connected to a bus 902 or other communications medium.

Computing system 900 can also include a main memory 908, such as random access memory (RAM) or other dynamic memory, for storing information and instructions to be executed by processor 904. Main memory 908 also may be used for storing temporary variables or other intermediate information during execution of instructions to be executed by processor 904. Computing system 900 may likewise include a read only memory (ROM) or other static storage device coupled to bus 902 for storing static information and instructions for processor 904.

The computing system 900 may also include information storage system 910, which may include, for example, a media drive 912 and a removable storage interface 920. The media drive 912 may include a drive or other mechanism to support fixed or removable storage media, such as a hard disk drive, a floppy disk drive, a magnetic tape drive, an optical disk drive, a compact disc (CD) or digital video drive (DVD) read and/or read-write drive (R or RW), or other removable or fixed media drive. Storage media 918 may include, for example, a hard disk, floppy disk, magnetic tape, optical disk, CD or DVD, or other fixed or removable medium that is read by and written to by media drive 944. As these examples illustrate, the storage media 918 may include a computer-readable storage medium having stored therein particular computer software or data.

In alternative embodiments, information storage system 910 may include other similar components for allowing computer programs or other instructions or data to be loaded into computing system 900. Such components may include, for example, a removable storage unit 922 and an interface 920, such as a program cartridge and cartridge interface, a removable memory (for example, a flash memory or other removable memory module) and memory slot, and other removable storage units 922 and interfaces 920 that allow software and data to be transferred from the removable storage unit 918 to computing system 900.

Computing system 900 can also include a communications interface 924. Communications interface 924 can be used to allow software and data to be transferred between computing system 900 and external devices. Examples of communications interface 924 can include a modem, a network interface (such as an Ethernet or other NIC card), a communications port (such as for example, a universal serial bus (USB) port), a PCMCIA slot and card, etc. Software and data transferred via communications interface 924 are in the form of signals which can be electronic, electromagnetic, and optical or other signals capable of being received by communications interface 924. These signals are provided to communications interface 924 via a channel 928. This channel 928 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product' 'computer-readable medium' and the like may be used generally to refer to media such as, for example, memory 908, storage device 918, or storage unit 922. These and other forms of computer-readable media may store one or more instructions for use by processor 904, to cause the processor to perform specified operations. Such instructions, generally referred to as 'computer program code' (which may be grouped in the form of computer programs or other groupings), when executed, enable the computing system 900 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 900 using, for example, removable storage drive 44, drive 912 or communications interface 924. The control logic (in this example, software instructions or computer program code), when executed by the processor 904, causes the processor 904 to perform the functions of the invention as described herein.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. Thus, the elements and components of an embodiment of the invention may be physically, functionally and logically implemented in any suitable way. Indeed, the functionality may be implemented in a single unit, in a plurality of units or as part of other functional units.

Although the invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Thus, a method and apparatus for routing PS data has been described, which substantially addresses at least some of the shortcomings of past and present techniques and/or mechanisms.

## Claims

1. A network element (405, 500) for enabling handover between a femtocell and a macrocell for packet switched, PS, data communication over a wireless data communication system (400), wherein the network element (405, 500) is located in an access network part of the wireless data communication system (400) and comprises:
packet inspection logic (519) arranged to inspect at least one received PS data packet that is being routed through the network element (405, 500) and determine whether the inspected at least one received PS data packet that is being routed through the network element (405, 500) comprises a destination address for an Application Domain supported by the network element (405, 500); and
PS routing logic (520) for routing, in response to a determination that the inspected at least one received PS data packet comprises a destination address for an Application Domain supported by the network element (405, 500), the at least one received PS data packet direct to an Application Domain logic layer (522);
wherein the network element (405, 500) is **characterised in that** the PS routing logic (520) comprises embedded Session Initiation Protocol, SIP, proxy logic arranged to enable the network element (405, 500) to create an independent security association with the Application Domain logic layer (522); and comprises, or is operably coupled to, address modifying logic (521) arranged to modify at least one address of the received PS data packet being routed through the network element (405, 500) to an IP Multimedia Subsystem ingress point address which comprises a Proxy Call Session Control Function (P-CSCF) logic address located in the IP Multimedia Subsystem domain and wherein the routing logic is arranged to hand over an on-going communication of an Application session, without having to close and re-establish a communication link by handing over an on-going communication from first P-CSCF logic (820) to second P-CSCF logic (822) using an 'UPDATE' or 're-INVITE' message.

2. The network element (405, 500) of Claim 1 further **characterised in that** the PS routing logic (520) comprises, or is operably coupled to, a routing data store (518) arranged to provide a destination address associated with at least one Application Domain supported by the network element (405, 500).

3. The network element (405, 500) of Claim 2 further **characterised in that** in response to identifying the destination address associated with the at least one Application Domain supported by the network element (405, 500), the PS routing logic (520) re-routes the received PS data according to an application domain address stored in the PS router data store (518).

4. The network element (405, 500) of Claim 3 further **characterised in that** the data store (518) arranged to store at least one of: first P-CSCF address data, second P-CSCF address data, local IP address data, IMS IP address data and AC address data.

5. The network element (405, 500) of any of the preceding Claims further **characterised in that** the Application Domain is an Internet Protocol Multimedia Subsystem (IMS) domain.

6. The network element (405, 500) of any preceding Claim further **characterised in that** if the packet inspection logic (519) determines a destination address that belongs within the domain of the network element (405, 500), then the received PS data packet is routed, to security layer logic (530) within the network element (405, 500).

7. The network element (405, 500) of any preceding Claim further **characterised in that**, in response to the packet inspection logic (519) determining that the destination address does not belong within the domain of the network element (405, 500) or an Application Domain supported by the network element (405, 500), then the destination address of the received PS data packet is not modified and the received PS data packet is routed direct to the Internet (430).

8. The network element (405, 500) of any preceding Claim wherein the network element (405, 500) comprises logic for registering with Operations and Management logic (425) and acknowledgement (632) of a successful registration comprises an Internet Protocol (IP) address of an application domain ingress gateway (P-CSCF-address).

9. A method for enabling handover from a femttocell to a macrocell for packet switched, PS, data over a wireless data communication system (400) comprising a cellular communication network element (405, 500) located in an access network part of the wireless data communication system (400) and operably coupled to the Internet (430), wherein the method (500) comprises:
inspecting at least one received PS data packet that is being routed through the network element (405, 500);
determining whether the inspected at least one received PS data packet that is being routed through the network element (405, 500) comprises a destination address for an Application Domain supported by the network element (405, 500);
routing, in response to a determination that the inspected at least one received PS data packet comprises a destination address for an Application Domain supported by the network element (405, 500), the at least one received PS data packet direct to an application domain logic layer (522) within the network element (405, 500) wherein the method is **characterised by**
creating an independent security association with the Application Domain logic layer (522) by embedded Session Initiation Protocol, SIP, proxy logic within the network element (405, 500),
modifying at least one address of the received PS data packet being routed through the network element (405, 500) to an IP Multimedia Subsystem ingress point address which comprises a Proxy Call Session Control Function (P-CSCF) logic address located in the IP Multimedia Subsystem domain, and handing over an on-going communication of an Application session, without having to close and re-establish a communication_link by handing over an on-going communication from first P-CSCF logic (820) to second P-CSCF logic (822) using an 'UPDATE' or 're-INVITE' message.

10. A wireless communication system (400) comprising a network element (405, 500) located in an access network part of the wireless communication system (400) for enabling handover from a femtocell to a macrocell for packet switched, PS, data communication, wherein the network element (405, 500) comprises:
packet inspection logic (519) arranged to inspect at least one received PS data packet that is being routed through the network element (405, 500); and determine whether the inspected at least one received PS data packet that is being routed through the network element (405, 500) comprises a destination address for an Application Domain supported by the network element (405, 500); and
PS routing logic (520) for routing, in response to a determination that the inspected at least one received PS data packet comprises a destination address for an Application Domain supported by the network element (405, 500), the at least one received PS data packet direct to an Application Domain logic layer (522)
wherein the network element is **characterised in that** the PS routing logic (520) comprises embedded Session Initiation Protocol, SIP, proxy logic arranged to enable the network element (405, 500) to create an independent security association with the Application Domain logic layer (522) and
the PS routing logic (520) comprises, or is operably coupled to, address modifying logic (521) arranged to modify at least one address of the received PS data packet being routed through the network element (405, 500) to an IP Multimedia Subsystem ingress point address which comprises a Proxy Call Session Control Function (P-CSCF) logic address located in the IP Multimedia Subsystem domain and wherein the routing logic is arranged to hand over an on-going communication of an Application session, without having to close and re-establish a communication link by handing over an on-going communication from first P-CSCF logic (820) to second P-CSCF logic (822) using an 'UPDATE' or 're-INVITE' message.

11. A computer-readable storage element (520) having computer-readable code stored thereon for programming signal processing logic to perform a method for enabling handover from a femtocell to a macrocell for packet switched, PS, data over a data communication system (400) comprising a cellular communication network element (405, 500) located in an access network part of a wireless communication system, wherein the computer-readable code comprises code operable for:
inspecting at least one received PS data packet that is being routed through the network element (405, 500);
determining whether the inspected at least one received PS data packet that is being routed through the network element (405, 500) comprises a destination address for an Application Domain supported by the network element (405, 500);
routing, in response to a determination that the inspected at least one received PS data packet comprises a destination address for an Application Domain supported by the network element (405, 500), the at least one received PS data packet direct to an application domain logic layer (522) within the network element (405, 500); and wherein the computer-readable code is **characterised by** code operable for
creating an independent security association with the Application Domain logic layer (522) by embedded Session Initiation Protocol, SIP, proxy logic within the network element (405, 500);
modifying at least one address of the received PS data packet being routed through the network element (405, 500) to an IP Multimedia Subsystem ingress point address which comprises a Proxy Call Session Control Function (P-CSCF) logic address located in the IP Multimedia Subsystem domain, and handing over an on-going communication of an Application session, without having to close and re-establish a communication link by handing over an on-going communication from first P-CSCF logic (820) to second P-CSCF logic (822) using an 'UPDATE' or 're-INVITE' message.

## Patentansprüche

1. Netzelement (405, 500) zum Ermöglichen des Handovers zwischen einer Femtozelle und einer Makrozelle zur paketvermittelten, PS, Datenkommunikation über ein drahtloses Datenkommunikationssystem (400), wobei das Netzelement (405, 500) sich in einem Zugangsnetzteil des drahtlosen Datenkommunikationssystems (400) befindet und Folgendes umfasst:
Paketuntersuchungslogik (519), die eingerichtet ist, um mindestens ein empfangenes PS-Datenpaket zu untersuchen, das durch das Netzelement (405, 500) geleitet wird, und zu bestimmen, ob das untersuchte mindestens eine empfangene PS-Datenpaket, das durch das Netzelement (405, 500) geleitet wird, eine Zieladresse für eine Anwendungsdomäne umfasst, die durch das Netzelement (405, 500) unterstützt wird; und
PS-Routing-Logik (520) zum Leiten des mindestens einen empfangenen PS-Datenpakets direkt an eine Anwendungsdomänen-Logikschicht (522) als Reaktion auf eine Bestimmung, dass das untersuchte mindestens eine empfangene PS-Datenpaket eine Zieladresse für eine Anwendungsdomäne umfasst, die durch das Netzelement (405, 500) unterstützt wird;
wobei das Netzelement (405, 500) **dadurch gekennzeichnet ist, dass** die PS-Routing-Logik (520) eingebettete Session Initiation Protocol, SIP, Proxy-Logik umfasst, die eingerichtet ist, um es dem Netzelement (405, 500) zu ermöglichen, eine unabhängige Sicherheits-Assoziation mit der Anwendungsdomänen-Logikschicht (522) zu erzeugen; und Adressmodifikationslogik (521) umfasst oder betriebsfähig daran gekoppelt ist, die eingerichtet ist, um mindestens eine Adresse des empfangenen PS-Datenpakets zu ändern, das durch das Netzelement (405, 500) an eine IP-Multimedia-Subsystem-Eingangspunktadresse geleitet wird, die eine Proxy Call Session Control Function (P-CSCF) Logik-Adresse umfasst, die sich in der IP-Multimedia-Subsystem-Domäne befindet, und wobei die Routing-Logik für das Handover einer laufenden Kommunikation einer Anwendungssitzung ohne eine Kommunikationsverbindung schließen und wiederherzustellen zu müssen durch Handover einer laufenden Kommunikation von erster P-CSCF-Logik (820) zu zweiter P-CSCF-Logik (822) unter Verwendung einer "UPDATE"- oder "re-INVITE"-Nachricht eingerichtet ist.

2. Netzelement (405, 500) nach Anspruch 1, ferner **dadurch gekennzeichnet, dass** die PS-Routing-Logik (520) einen Routing-Datenspeicher (518) umfasst oder betriebsfähig daran gekoppelt ist, der eingerichtet ist, um eine Zieladresse bereitzustellen, die mindestens einer Anwendungsdomäne zugehörig ist, die durch das Netzelement (405, 500) unterstützt wird.

3. Netzelement (405, 500) nach Anspruch 2, ferner **dadurch gekennzeichnet, dass** die PS-Routing-Logik (520) als Reaktion auf das Identifizieren der Zieladresse, die der mindestens einen Anwendungsdomäne zugehörig ist, die durch das Netzelement (405, 500) unterstützt wird, die empfangenen PS-Daten gemäß einer Anwendungsdomänenadresse weiterleitet, die in dem PS-Router-Datenspeicher (518) gespeichert ist.

4. Netzelement (405, 500) nach Anspruch 3, ferner **dadurch gekennzeichnet, dass** der Datenspeicher (518) eingerichtet ist, um mindestens eines von Folgendem zu speichern: erste P-CSCF-Adressdaten, zweite P-CSCF-Adressdaten, lokale IP-Adressdaten, IMS-IP-Adressdaten und AC-Adressdaten.

5. Netzelement (405, 500) nach einem der vorhergehenden Ansprüche, ferner **dadurch gekennzeichnet, dass** die Anwendungsdomäne eine Internet Protocol Multimedia Subsystem (IMS) Domäne ist.

6. Netzelement (405, 500) nach einem der vorhergehenden Ansprüche, ferner **dadurch gekennzeichnet, dass**, wenn die Paketuntersuchungslogik (519) eine Zieladresse bestimmt, die in die Domäne des Netzelements (405, 500) gehört, das empfangene PS-Datenpaket an Sicherheitsschichtlogik (530) innerhalb des Netzelements (405, 500) geleitet wird.

7. Netzelement (405, 500) nach einem der vorhergehenden Ansprüche, ferner **dadurch gekennzeichnet, dass** als Reaktion darauf, dass die Paketuntersuchungslogik (519) bestimmt, dass die Zieladresse nicht in die Domäne des Netzelements (405, 500) oder eine Anwendungsdomäne gehört, die durch das Netzelement (405, 500) unterstützt wird, die Zieladresse des empfangenen PS-Datenpakets nicht geändert wird und das empfangene PS-Datenpaket direkt an das Internet (430) geleitet wird.

8. Netzelement (405, 500) nach einem der vorhergehenden Ansprüche, wobei das Netzelement (405, 500) Logik zum Registrieren bei Betriebs- und Verwaltungslogik (425) umfasst und die Bestätigung (632) einer erfolgreichen Registrierung eine Internet Protokoll (IP) Adresse eines Anwendungsdomänen-Eingangs-Gateways (P-CSCF-Adresse) umfasst.

9. Verfahren zum Ermöglichen von Handover von einer Femtozelle zu einer Makrozelle für paketvermittelte, PS, Daten über ein drahtloses Datenkommunikationssystem (400), das ein zellulares Kommunikationsnetzelement (405, 500) umfasst, das sich in einem Zugangsnetzteil des drahtlosen Datenkommunikationssystems (400) befindet und betriebsfähig an das Internet (430) gekoppelt ist, wobei das Verfahren (500) Folgendes umfasst:
Untersuchen von mindestens einem empfangenen PS-Datenpaket, das durch das Netzelement (405, 500) geleitet wird;
Bestimmen, ob das untersuchte mindestens eine empfangene PS-Datenpaket, das durch das Netzelement (405, 500) geleitet wird, eine Zieladresse für eine Anwendungsdomäne umfasst, die durch das Netzelement (405, 500) unterstützt wird;
Leiten des mindestens einen empfangenen PS-Datenpakets direkt an eine Anwendungsdomänen-Logikschicht (522) innerhalb des Netzelements (405, 500) als Reaktion auf eine Bestimmung, dass das untersuchte mindestens eine empfangene PS-Datenpaket eine Zieladresse für eine Anwendungsdomäne umfasst, die durch das Netzelement (405, 500) unterstützt wird, wobei das Verfahren durch Folgendes gekennzeichnet ist:
Erzeugen einer unabhängigen Sicherheits-Assoziation mit der Anwendungsdomänen-Logikschicht (522) durch eingebettete Session Initiation Protocol, SIP, Proxy-Logik innerhalb des Netzelements (405, 500),
Ändern der mindestens einen Adresse des empfangenen PS-Datenpakets, das durch das Netzelement (405, 500) an eine IP-Multimedia-Subsystem-Eingangspunktadresse geleitet wird, die eine Proxy Call Session Control Function (P-CSCF) Logikadresse umfasst, die sich in der IP-Multimedia-Subsystem-Domäne befindet, und Handover einer laufenden Kommunikation einer Anwendungssitzung ohne eine Kommunikationsverbindung schließen und wiederherstellen zu müssen durch Handover einer laufenden Kommunikation von erster P-CSCF-Logik (820) zu zweiter P-CSCF-Logik (822) unter Verwendung einer "UPDATE"- oder "re-INVITE"-Nachricht.

10. Drahtloses Kommunikationssystem (400), das ein Netzelement (405, 500) umfasst, das sich in einem Zugangsnetzbereich des drahtlosen Kommunikationssystems (400) befindet, zum Ermöglichen von Handover von einer Femtozelle zu einer Makrozelle für paketvermittelte, PS, Datenkommunikation, wobei das Netzelement (405, 500) Folgendes umfasst:
Paketuntersuchungslogik (519), die eingerichtet ist, um mindestens ein empfangenes PS-Datenpaket zu untersuchen, das durch das Netzelement (405, 500) geleitet wird; und zu bestimmen, ob das untersuchte mindestens eine empfangene PS-Datenpaket, das durch das Netzelement (405, 500) geleitet wird, eine Zieladresse für eine Anwendungsdomäne ist, die durch das Netzelement (405, 500) unterstützt wird; und
PS-Routing-Logik (520) zum Leiten des mindestens einen empfangenen PS-Datenpakets direkt an eine Anwendungsdomänen-Logikschicht (522) als Reaktion auf eine Bestimmung, dass das untersuchte mindestens eine empfangene PS-Datenpaket eine Zieladresse für eine Anwendungsdomäne umfasst, die durch das Netzelement (405, 500) unterstützt wird;
wobei das Netzelement (405, 500) **dadurch gekennzeichnet ist, dass** die PS-Routing-Logik (520) eingebettete Session Initiation Protocol, SIP, Proxy-Logik umfasst, die eingerichtet ist, um es dem Netzelement (405, 500) zu ermöglichen, eine unabhängige Sicherheits-Assoziation mit der Anwendungsdomänen-Logikschicht (522) zu erzeugen; und
die PS-Routing-Logik (520) Adressmodifikationslogik (521) umfasst oder betriebsfähig daran gekoppelt ist, die eingerichtet ist, um mindestens eine Adresse des empfangenen PS-Datenpakets zu ändern, das durch das Netzelement (405, 500) an eine IP-Multimedia-Subsystem-Eingangspunktadresse geleitet wird, die eine Proxy Call Session Control Function (P-CSCF) Logik-Adresse umfasst, die sich in der IP-Multimedia-Subsystem-Domäne befindet, und wobei die Routing-Logik für das Handover einer laufenden Kommunikation einer Anwendungssitzung ohne eine Kommunikationsverbindung schließen und wiederherzustellen zu müssen durch Handover einer laufenden Kommunikation von erster P-CSCF-Logik (820) zu zweiter P-CSCF-Logik (822) unter Verwendung einer "UPDATE"- oder "re-INVITE"-Nachricht eingerichtet ist.

11. Maschinenlesbares Speicherelement (520), das darauf gespeicherten maschinenlesbaren Code zum Programmieren von Signalverarbeitungslogik zum Durchführen eines Verfahrens zum Ermöglichen von Handover von einer Femtozelle zu einer Makrozelle für paketvermittelte, PS, Daten über ein Datenkommunikationssystem (400) aufweist, das ein zellulares Kommunikationsnetzelement (405, 500) umfasst, das sich in einem Zugangsnetzteil eines drahtlosen Kommunikationssystems befindet, wobei der maschinenlesbare Code Code umfasst, der für Folgendes betriebsfähig ist:
Untersuchen von mindestens einem empfangenen PS-Datenpaket, das durch das Netzelement (405, 500) geleitet wird;
Bestimmen, ob das untersuchte mindestens eine empfangene PS-Datenpaket, das durch das Netzelement geleitet wird (405, 500), eine Zieladresse für eine Anwendungsdomäne umfasst, die durch das Netzelement (405, 500) unterstützt wird;
Leiten des mindestens einen empfangenen PS-Datenpakets direkt an eine Anwendungsdomänen-Logikschicht (522) innerhalb des Netzelements (405, 500) als Reaktion auf eine Bestimmung, dass das untersuchte mindestens eine empfangene PS-Datenpaket eine Zieladresse für eine Anwendungsdomäne umfasst, die durch das Netzelement (405, 500) unterstützt wird; und wobei der maschinenlesbare Code durch Code gekennzeichnet ist, der für Folgendes betriebsfähig ist:
Erzeugen einer unabhängigen Sicherheits-Assoziation mit der Anwendungsdomänen-Logikschicht (522) durch eingebettete Session Initiation Protocol, SIP, Proxy-Logik innerhalb des Netzelements (405, 500);
Ändern von mindestens einer Adresse des empfangenen PS-Datenpakets, das durch das Netzelement (405, 500) an eine IP-Multimedia-Subsystem-Eingangspunktadresse geleitet wird, die eine Proxy Call Session Control Function (P-CSCF) Logikadresse umfasst, die sich in der IP Multimedia Subsystem Domäne befindet, und Handover einer laufenden Kommunikation einer Anwendungssitzung ohne eine Kommunikationsverbindung schließen und wiederherstellen zu müssen durch Handover einer laufenden Kommunikation von erster P-CSCF-Logik (820) zu zweiter P-CSCF-Logik (822) unter Verwendung einer "UPDATE"- oder "re-INVITE"-Nachricht.

## Revendications

1. Elément de réseau (405, 500) pour permettre le transfert entre une femtocellule et une macrocellule pour la communication de données à commutation de paquets, PS, sur un système de communication de données sans fil (400), où l'élément de réseau (405, 500) est situé dans une partie de réseau d'accès du système de communication de données sans fil (400) et comprend :
une logique d'inspection de paquet (519) agencée pour inspecter au moins un paquet de données PS reçu qui est routé par l'intermédiaire de l'élément de réseau (405, 500) et déterminer si le au moins un paquet de données PS reçu inspecté qui est routé par l'intermédiaire de l'élément de réseau (405, 500) comprend une adresse de destination pour un Domaine d'application supporté par l'élément de réseau (405, 500) ; et
une logique de routage PS (520) pour router, en réponse à une détermination selon laquelle le au moins un paquet de données PS reçu inspecté comprend une adresse de destination pour un Domaine d'application supporté par l'élément de réseau (405, 500), le au moins un paquet de données PS reçu directement vers une couche logique de Domaine d'application (522) ;
où l'élément de réseau (405, 500) est **caractérisé en ce que** la logique de routage PS (520) comprend une logique mandataire de Protocole d'initiation de session, SIP, intégrée, agencée pour permettre à l'élément de réseau (405, 500) de créer une association de sécurité indépendante avec la couche logique de Domaine d'application (522) ; et comprend, ou est couplée fonctionnellement à, une logique de modification d'adresse (521) agencée pour modifier au moins une adresse du paquet de données PS reçu qui est routé par l'intermédiaire de l'élément de réseau (405, 500) en une adresse de point d'entrée de Sous-système multimédia IP qui comprend une adresse logique de Fonction de contrôle de session d'appel mandataire (P-CSCF) située dans le domaine de Sous-système multimédia IP et où la logique de routage est agencée pour transférer une communication en cours d'une session d'Application, sans avoir à fermer et réétablir une liaison de communication en transférant une communication en cours d'une première logique P-CSCF (820) à une seconde logique P-CSCF (822) en utilisant un message « UPDATE » (MISE A JOUR) ou « re-INVITE » (ré-INVITATION).

2. Elément de réseau (405, 500) selon la revendication 1, en outre **caractérisé en ce que** la logique de routage PS (520) comprend, ou est couplée fonctionnellement à, une mémoire de données de routage (518) agencée pour fournir une adresse de destination associée à au moins un Domaine d'application supporté par l'élément de réseau (405, 500).

3. Elément de réseau (405, 500) selon la revendication 2, en outre **caractérisé en ce qu'**en réponse à l'identification de l'adresse de destination associée au au moins un domaine d'application supporté par l'élément de réseau (405, 500), la logique de routage PS (520) re-route les données PS reçues en fonction d'une adresse de domaine d'application stockée dans la mémoire de données de routeur PS (518).

4. Elément de réseau (405, 500) selon la revendication 3, en outre **caractérisé en ce que** la mémoire de données (518) est agencée pour stocker au moins une parmi : des premières données d'adresse P-CSCF, des secondes données d'adresse P-CSCF, des données d'adresse IP locales, des données d'adresse IP IMS et des données d'adresse AC.

5. Elément de réseau (405, 500) selon l'une quelconque des revendications précédentes, en outre **caractérisé en ce que** le Domaine d'application est un domaine de Sous-système multimédia (IMS) de protocole Internet.

6. Elément de réseau (405, 500) selon l'une quelconque des revendications précédentes, en outre **caractérisé en ce que** si la logique d'inspection de paquet (519) détermine une adresse de destination qui appartient au domaine de l'élément de réseau (405, 500), alors le paquet de données PS reçu est routé, vers la logique de couche de sécurité (530) à l'intérieur de l'élément de réseau (405, 500).

7. Elément de réseau (405, 500) selon l'une quelconque des revendications précédentes, en outre **caractérisé en ce que**, en réponse à la logique d'inspection de paquet (519) déterminant que l'adresse de destination n'appartient pas au domaine de l'élément de réseau (405, 500) ou à un Domaine d'application supporté par l'élément de réseau (405, 500), alors l'adresse de destination du paquet de données PS reçu n'est pas modifiée et le paquet de données PS reçu est routé directement vers Internet (430).

8. Elément de réseau (405, 500) selon l'une quelconque des revendications précédentes, où l'élément de réseau (405, 500) comprend une logique pour l'enregistrement avec une logique Opérations et Gestion (425) et l'accusé de réception (632) d'un enregistrement réussi comprend une adresse de Protocole Internet (IP) d'une passerelle d'entrée de domaine d'application (adresse P-CSCF).

9. Procédé pour permettre le transfert d'une femtocellule à une macrocellule pour des données à commutation de paquets, PS, sur un système de communication de données sans fil (400) comprenant un élément de réseau de communication cellulaire (405, 500) situé dans une partie de réseau d'accès du système de communication de données sans fil (400) et couplé fonctionnellement à Internet (430), où le procédé (500) comprend :
l'inspection d'au moins un paquet de données PS reçu qui est routé par l'intermédiaire de l'élément de réseau (405, 500) ;
la détermination de si le au moins un paquet de données PS reçu inspecté qui est routé par l'intermédiaire de l'élément de réseau (405, 500) comprend une adresse de destination pour un Domaine d'application supporté par l'élément de réseau (405,500) ;
le routage, en réponse à une détermination selon laquelle le au moins un paquet de données PS reçu inspecté comprend une adresse de destination pour un Domaine d'application supporté par l'élément de réseau (405, 500), du au moins un paquet de données PS reçu directement vers une couche logique de domaine d'application (522) à l'intérieur de l'élément de réseau (405, 500), où le procédé est **caractérisé par**
la création d'une association de sécurité indépendante avec la couche logique de Domaine d'application (522) par une logique mandataire de Protocole d'initiation de session, SIP, intégrée à l'intérieur de l'élément de réseau (405, 500),
la modification d'au moins une adresse du paquet de données PS reçu qui est routé par l'intermédiaire de l'élément de réseau (405, 500) en une adresse de point d'entrée de Sous-système multimédia IP qui comprend une adresse logique de Fonction de contrôle de session d'appel mandataire (P-CSCF) située dans le domaine de Sous-système multimédia IP, et le transfert d'une communication en cours d'une session d'Application, sans avoir à fermer et réétablir une liaison de communication en transférant une communication en cours d'une première logique P-CSCF (820) à une seconde logique P-CSCF (822) en utilisant un message « UPDATE » (MISE A JOUR) ou « re-INVITE » (ré-INVITATION).

10. Système de communication sans fil (400) comprenant un élément de réseau (405, 500) situé dans une partie de réseau d'accès du système de communication sans fil (400) pour permettre le transfert d'une femtocellule à une macrocellule pour la communication de données à commutation de paquets, PS, où l'élément de réseau (405, 500) comprend :
une logique d'inspection de paquet (519) agencée pour inspecter au moins un paquet de données PS reçu qui est routé par l'intermédiaire de l'élément de réseau (405, 500) ; et déterminer si le au moins un paquet de données PS reçu inspecté qui est routé par l'intermédiaire de l'élément de réseau (405, 500) comprend une adresse de destination pour un Domaine d'application supporté par l'élément de réseau (405,500) ; et
une logique de routage PS (520) pour router, en réponse à une détermination selon laquelle le au moins un paquet de données PS reçu inspecté comprend une adresse de destination pour un Domaine d'application supporté par l'élément de réseau (405, 500), le au moins un paquet de données PS reçu directement vers une couche logique de Domaine d'application (522) ;
où l'élément de réseau est **caractérisé en ce que** la logique de routage PS (520) comprend une logique mandataire de Protocole d'initiation de session, SIP, intégrée, agencée pour permettre à l'élément de réseau (405, 500) de créer une association de sécurité indépendante avec la couche logique de Domaine d'application (522) et
la logique de routage PS (520) comprend, ou est couplée fonctionnellement à, une logique de modification d'adresse (521) agencée pour modifier au moins une adresse du paquet de données PS reçu qui est routé par l'intermédiaire de l'élément de réseau (405, 500) en une adresse de point d'entrée de Sous-système multimédia IP qui comprend une adresse logique de Fonction de contrôle de session d'appel mandataire (P-CSCF) située dans le domaine de Sous-système multimédia IP et où la logique de routage est agencée pour transférer une communication en cours d'une session d'Application, sans avoir à fermer et réétablir une liaison de communication en transférant une communication en cours d'une première logique P-CSCF (820) à une seconde logique P-CSCF (822) en utilisant un message « UPDATE » (MISE A JOUR) ou « re-INVITE » (ré-INVITATION).

11. Elément de stockage lisible par ordinateur (520) sur lequel est stocké un code lisible par ordinateur pour programmer une logique de traitement de signal afin d'effectuer un procédé pour permettre le transfert d'une femtocellule à une macrocellule pour des données à commutation de paquets, PS, sur un système de communication de données (400) comprenant un élément de réseau de communication cellulaire (405, 500) situé dans une partie de réseau d'accès d'un système de communication sans fil, où le code lisible par ordinateur comprend un code exploitable pour :
inspecter au moins un paquet de données PS reçu qui est routé par l'intermédiaire de l'élément de réseau (405, 500) ;
déterminer si le au moins un paquet de données PS reçu inspecté qui est routé par l'intermédiaire de l'élément de réseau (405, 500) comprend une adresse de destination pour un Domaine d'application supporté par l'élément de réseau (405,500) ;
router, en réponse à une détermination selon laquelle le au moins un paquet de données PS reçu inspecté comprend une adresse de destination pour un Domaine d'application supporté par l'élément de réseau (405, 500), le au moins un paquet de données PS reçu directement vers une couche logique de domaine d'application (522) à l'intérieur de l'élément de réseau (405, 500) ; et où le code lisible par ordinateur est **caractérisé par** un code exploitable pour
créer une association de sécurité indépendante avec la couche logique de Domaine d'application (522) par une logique mandataire de Protocole d'initiation de session, SIP, intégrée à l'intérieur de l'élément de réseau (405, 500) ;
modifier au moins une adresse du paquet de données PS reçu qui est routé par l'intermédiaire de l'élément de réseau (405, 500) en une adresse de point d'entrée de Sous-système multimédia IP qui comprend une adresse logique de Fonction de contrôle de session d'appel mandataire (P-CSCF) située dans le domaine de Sous-système multimédia IP, et transférer une communication en cours d'une session d'Application, sans avoir à fermer et réétablir une liaison de communication en transférant une communication en cours d'une première logique P-CSCF (820) à une seconde logique P-CSCF (822) en utilisant un message « UPDATE » (MISE A JOUR) ou « re-INVITE » (ré-INVITATION).
